# EUROPEAN PATENT SPECIFICATION

(11) **EP 1 580 159 B1**
(45) Date of publication and mention of the grant of the patent: **20.09.2006**
(21) Application number: 04006907.2
(22) Date of filing: 23.03.2004
(51) Int. Cl.: B66C 13/12, F16L 13/16, E02F 9/22, B66F 9/20

(54) **Hose guide of a crane**
Schlauchführung eines Krans
Guide des tuyaux d'un grue

(43) Date of publication of application: 28.09.2005
(73) Proprietor: HIAB AB, S-824 83 Hudiksvall (SE)
(72) Inventor: Herdegard, Per, 824 41 Hudiksvall (SE)
(74) Representative: Fröderberg, Anders Oskar

(56) References cited:
- JP-A- 2002 266 374
- US-A- 4 304 077
- US-A- 5 806 313

## Description

### THE TECHNICAL FIELD OF THE INVENTION

The present invention relates to a crane of the type comprising two beams that are pivotal in relation to each other by being connected with each other through a hinge, and comprising one or more hoses that extend along the beams and in an exposed state on the outside of and in the region of the hinge between the beams

### THE BACKGROUND OF THE INVENTION

Cranes for lifting purposes, such as knuckle boom cranes for vehicles, comprise two or more beams that are interconnected two and two through hinges, enabling the pivotation of the beams to different angular positions in relation to each other. As a minimum, none-complicated cranes comprises a first beam formed by a lifting arm and a second beam formed by a post or frame, which, normally, is rotatably connected with a supporting frame, for example included in a vehicle chassis. The hinge that makes pivotation possible is then positioned to connect the upper end of the post with the inner end of the lifting arm. Many cranes, such as vehicle-carried knuckle boom cranes, also comprise at least one third beam form by a so called knuckle boom, the inner end of which is hingedly connected with the outer end of the lifting arm. Furthermore, the knuckle boom may comprise a plurality of beams that are telescopically projectable. In modern lifting cranes the beams are formed by elongated profiles, for example hollow profiles (hexagon profiles) or open U-profiles made of metal, particularly steel. In order not only to bring the beams into pivotation in relation to each other, but also to reliably maintain the beams in the requested angular positions, hydraulically operating, double-acting piston-cylinder mechanisms are used, said mechanisms being of the type that comprises a cylinder, one end of which is pivotally connected with one of the beams, and a piston rod that projects out of the cylinder and that, at its free end, is pivotally connected with the second beam of a pair of interacting beams. Depending on the number of beams and piston-cylinder mechanisms, and any possible components that require a supply of oil, a plurality of oil-conducting hoses has to be guided through the crane. Normally, this is achieved by the hoses being guided inside the cavities or the interior of the beam profiles after first having been guided upwards in the middle of the turning or rotating post and thereafter having continued to the lifting arm (short hoses) or further to the knuckle boom and the projecting beams thereof (longer hoses). As an alternative, the hoses may also be guided exteriorly. In the region of the individual hinge between two beams, each individual hose has to pass outside the hinge. As the total geometric distance between the inlet and outlet ends of the hose varies depending on the configuration of the crane at each moment, that is depending on the set angles between adjacent crane beams, each hose has to be dimensioned for the maximum distance between the hose ends. This distance is at its longest when the crane is in its parking position and the beams are pivoted to a small angle in relation to each other. On the other hand, the geometric distance between the hose ends is at its shortest when the crane beams are pivoted to a maximum, for example 180°, in relation to each other. In the position last mentioned, each individual hose will bulge where there is the least possible counteraction, namely in the region of a hinge where the hose passes exteriorly in an exposed state. Such bulging of the hoses may result in problems, in particular when it appears in the region between a hinge between crane pillar and a lifting arm. Accordingly, such hose bulging may collide, for example, with a vehicle cabin or a vertical exhaust pipe as the post is turned in relation to the associated frame. Such collisions may cause damages, not only on the vehicle parts, but also on the hoses, which run the risk of being worn or prematurely destroyed. In order to avoid hose collisions, the measure has so far been to dimension the crane and the surrounding thereof, for example on a vehicle, in such a way that the spacing around the crane has become rather large. In other words, the hose bulging intrudes on the effective cargo space in connection to the crane.

A hose guard assembly is previously known from US 5,806,313. A shield made of flexible material spans the hinge area externally between pivoting stick and boom members, guarding the hoses running under the shield. The shield is in each end connected to a rigid post which is secured to and rising from the stick and boom members, respectively. The flexible shield accommodates its shape to the relative motion of the stick and boom, the shield being extended upon realignment and compressed upon pivoting of the stick and boom members.

### THE OBJECTS AND FEATURES OF THE INVENTION

The present invention has at its aim to remedy the above-mentioned disadvantages of prior cranes and to provide an improved crane. A primary object of the invention is to provide a crane the hydraulic hoses of which do not run the risk of forming exteriorly projecting bulging or loops that that may be damaged or cause damage. It is also an object to provide a crane that, by means of a none-complicated design, guarantees a well-organized guiding of hoses and that contributes to an aesthetically attractive look of the crane, independent of the adopted crane position.

According to the invention, at least the primary object is achieved by means of the features that are stated in the characterizing part of patent claim 1. Furthermore, advantageous embodiments of the invented crane are defined in the dependent patent claims.

### BRIEF DESCRIPTION OF THE ANNEXED DRAWINGS

On the drawings:
- Fig. 1: is a view of a knuckle boom crane according to the invention, illustrated with the lifting arm of the crane pivoted to a high position,
- Fig. 2: is a view showing the crane in a parking position,
- Fig. 3: is a partial view showing the crane with the lifting arm in a generally horizontal, intermediate position, and
- Fig. 4: is a partial view in perspective, illustrating a hose guide in the region between the post and the lifting arm of the crane.

### DETAILED DESCRIPTION A PREFERRED EMBODIMENT OF THE INVENTION

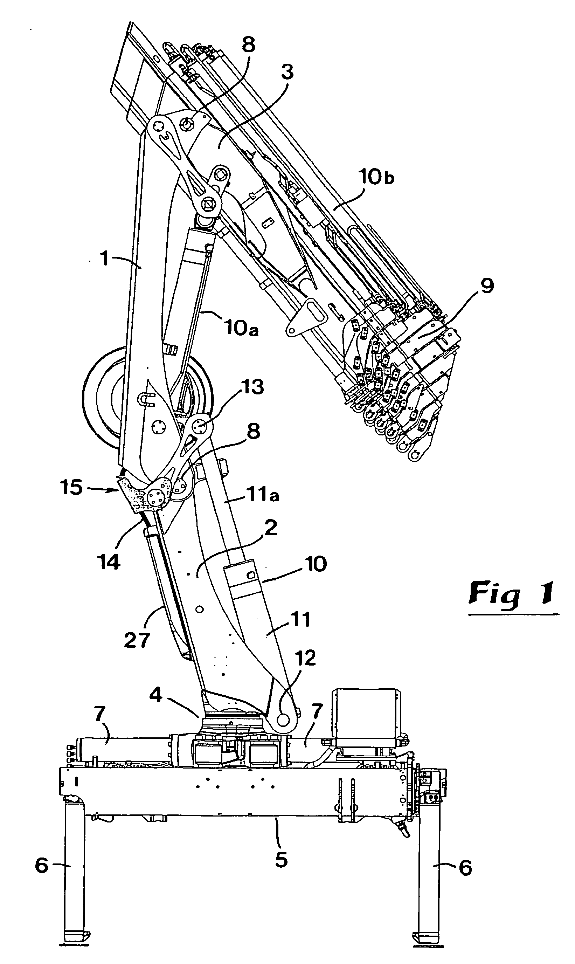

The crane shown in fig. 1 comprises three beams, namely a lifting arm 1, a post or a so called pillar 2, and a knuckle boom 3. The post 2, which is vertical but inclines somewhat in relation to the vertical plane, is rotatably mounted in relation to a crane base 4 in a carrying under frame 5, which may be included in a vehicle chassis and comprise two adjustable, moveable support legs 6. A rotation (normally at least 360°) of the post 2 in relation to the crane base is, in this example, performed by means of two hydraulic cylinders 7.

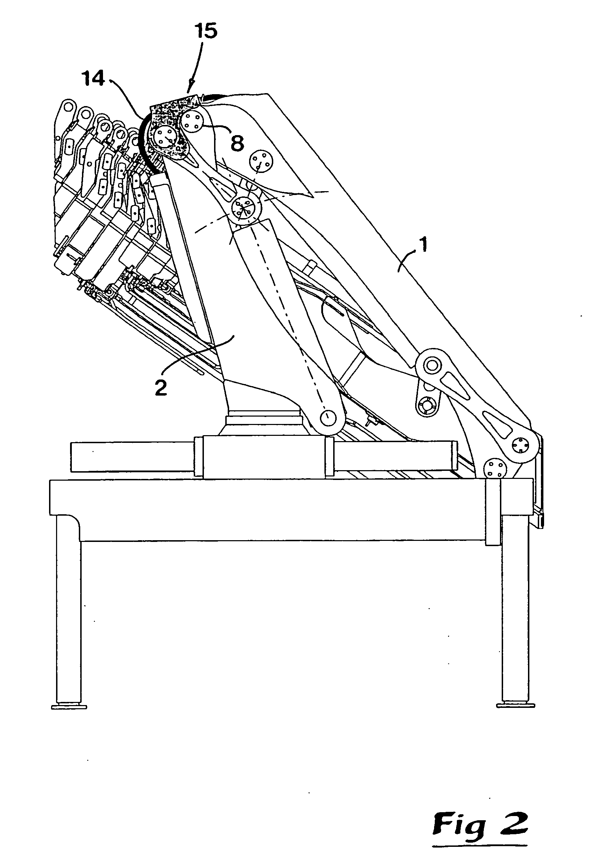

The post 2 and the lifting arm 1 are interconnected through a first hinge or main hinge 8, that makes a pivotation of the lifting arm in relation to the post possible, more precisely between the high position shown in fig. 1 and the parking position in which it is retracted towards the post, as shown in fig. 2. A similar hinge 8 between the lifting arm 1 and the knuckle boom 3 permits the pivotation of the latter boom between its retracted and projected positions. In the knuckle boom 3 there is included a plurality of telescopically moveable beams 9 formed by hollow profiles that are inserted into each other.

A pivotation of the lifting arm 1 is performed by means of a first hydraulically operating piston-cylinder mechanism 10 of a double-acting type, the cylinder 11 of which is connected with the post 2 through a hinge 12. The free end of the piston shaft 11a, that projects out of the cylinder, is connected with the lifting arm 1 through a second hinge 13. When the piston-cylinder mechanism 10 is extended, the lifting arm 1 is pivoted in a direction upwards, while a reduction of the length of the mechanism results in the lifting arm being pivoted downwards and inwards towards the post. A similar piston-cylinder mechanism 10a is connected with the lifting arm 1 on one hand and with the knuckle boom 3 on the other hand, in order to, in a similar way, pivot the knuckle boom in relation to the lifting arm. In order to displace the telescopic beams 9 into and out of each other, further piston-cylinder mechanisms or hydraulic cylinders 10b of a double-acting type are used.

The post 2 as well as the lifting arm 1 consists of open U-profiles, inside which the hydraulic cylinders 10, 10a can be partially accommodated. In the interior of the U-profiles there are also provided hoses 14 in order to supply the different hydraulic cylinders and/ or other components in the crane with hydraulic oil from a pump (not shown). The number of hoses that have to be guided to different parts of the crane varies substantially depending on the complexity of the crane. Normally, the number of hoses is 4-12. From the pump 15 a bunch of hoses are guided in the middle through the crane base 4 and further through the post 2. When the bunch of hoses then has to pass to and through the lifting arm 1, the hoses have to be guided on the outside of the hinge 8 between the post 2 and the lifting arm 1, that is in a state in which it is exteriorly exposed.

In the parking position according to fig. 2, the geometric distance ("required distance") between the fixed inlet end of each individual hose and its likewise fixed outlet end is at maximum. In other words, the length of the individual hose (or of the hose parts, if there are more than one part forming a hose) has to be dimensioned with regard to the parking position of the crane according to fig. 2. In this position, all hoses are substantially extended.

In fig. 1 however, the geometric distance between the inlet and outlet ends of the individual hose is substantially shorter. As the hoses are relatively rigid, they attend to bulge or expand in the region where the resistance against shape changes is the least, namely in the region between the lifting arm 1 and the post 2 in which they are exteriorly freely exposed.

So far, the crane shown on the drawings and described is essentially previously known.

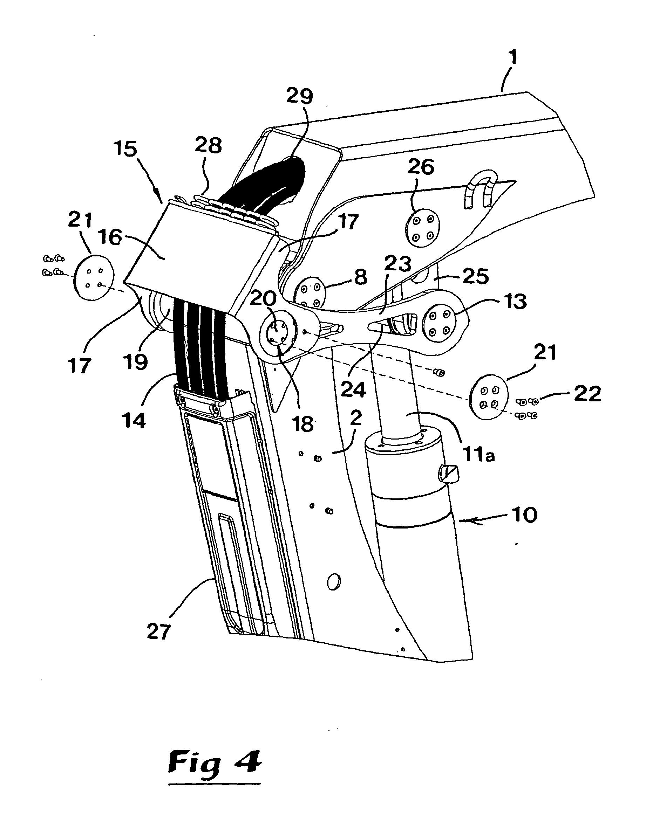

Reference is now made to fig. 4, which illustrates a guide 15 according to the invention for guiding or retaining the bunch of hoses 14 in the region between the lifting arm 1 and the post 2. It is characterizing for this guide that it comprises a transverse piece 16 at the inside of which the hoses are provided. In the example, the transverse piece 16 forms part of a U-shaped part, more precisely a U-shaped, bent sheet, which also comprises two lateral pieces or ears 17.

In the preferred embodiment shown, the guide 15 is connected with the post 2 through a hinge indicated with 18, said hinge extending in parallel with the transverse piece 16. In practise, this hinge 18 may comprise an outer tube piece 19, fixed to the upper end of the post 2, for example by means of welding, and a pin 20, which is rotatably mounted inside the tube 19 and which, at the opposite ends thereof, is rigidly connected with the lateral pieces 17 of the guide. Advantageously, the connection between the pin 20 and the lateral pieces 17 is of a releasable or demountable nature. Accordingly, in the example, the connection is comprised by a washer 21 with holes for screws 22, which can be driven into the end of the pin 20 in order to clamp the individual lateral piece 17 against the pin.

At least one of the two lateral pieces is rigidly connected with one of the ends of a link 23, the opposite end of which is connected with the hinge 13, more precisely in such a way that the link can pivot around the axis defined by the hinge 13. In practise, this hinge 13 may be comprised by a transverse pin 24 which, in a suitable way, is pivotally mounted in the free end of the piston rod 11a. Moreover, the pin 24 is rotatably mounted into further links, only one of which 25 is visible in fig. 4. That end of each such link 25 that is located opposite to the pin 24 is, in its turn, rotatably mounted in relation to the lifting arm through a further hinge, indicated with 26. By the link 23, the guide 15 is forced to follow the movements of the piston rod 11a out of and into the cylinder 11, in its turn resulting in the guide generally following the movements of the lifting arm 1 in relation to the post 2. As the hinges 8 and 18 are separated from each other, the guide will, however, not slavishly follow the pivotation movements of the lifting arm 1.

The parts of the hoses that are guided through the centre of the crane base 4 initially pass inside the U-shaped profile that forms the post 2, but at a short distance above the crane base the hoses are projected through holes on the back of the profile in order to extend on the outside of said back, but protected in an outer casing 27, which is open at its top. From the upper opening of the protection casing 27 the hoses extend through the space between the transverse piece 16 of the guide 15 and the tube 19. The bunch of hoses passes into the interior of the lifting arm 1 through an opening 29 in an end plate included in the lifting arm.

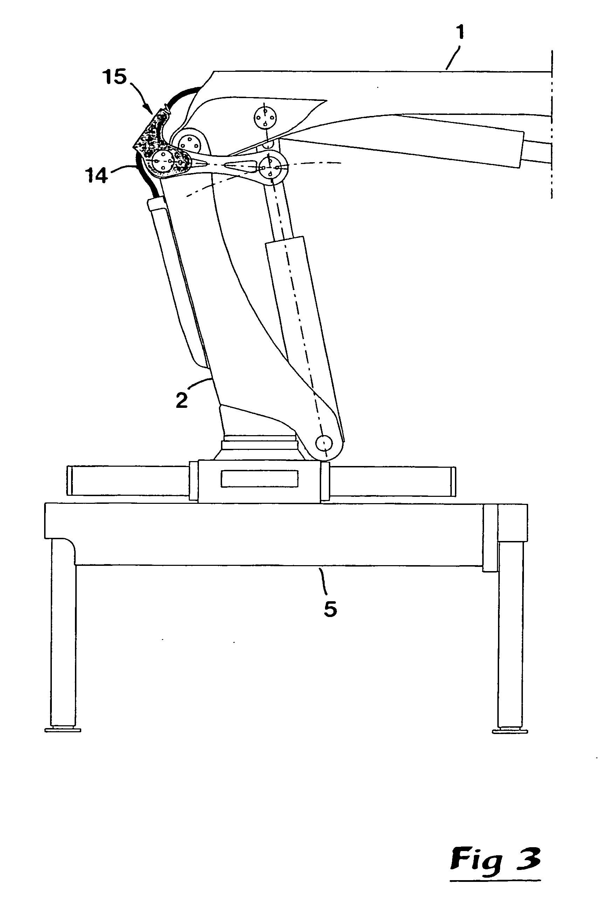

Independent of which crane position that is adopted (see fig. 1, 2 and 3) the guide 15 guarantees that the bunch of hoses is always properly held towards the hinges 18, 8 without bulging in this region. The changes of the distance between the inlet and outlet ends of the hoses that appear as the crane position is varied, is adopted as the hoses bend and coil laterally as well as vertically inside the beams. As the transverse piece 16 has a relatively large surface, the inside thereof present a large surface along which the hoses can bear and slide while, at the same time, having a softly rounded shape with a large radius of curvature. It is also an advantage that the invented crane uses only a minimum of space in connection to its pivotation; something that in its turn results in a large effective cargo space in connection to said crane.

## Claims

1. A crane comprising two beams (1, 2) pivotally moveable in relation to each other by means of being connected with each other through a hinge (8), and comprising one or more hoses (14) that extend along the beams (1, 2) and in an exposed state on the outside of and in the region of the hinge (8) between the beams, and wherein in the region of the hinge (8), there is provided a guide (15) provided with a transverse piece (16) which is distant from the hinge, said hoses (14) being arranged at the inside of the transverse piece to be detained close to the hinge by the latter,
**characterized in that** the transverse piece (16) forms part of a part that, in cross section, is Ushaped and provided with two side pieces (17), which are connected with a second hinge (18) parallel with the first hinge (8), said hoses (14) being guided through a space between the transverse piece (16) and said second hinge (18).

2. A crane according to claim 1, **characterized in that** at least one side piece (17) is rigidly connected with a first end of a link (23), the opposite end of which is connected with a third hinge (13) arranged to follow a free end of a piston rod (11a) included in a piston-cylinder mechanism (10), having as its task to pivot one of the beams (1, 2) in relation to the other one, said link (23) thereby guaranteeing that the guide (15) follows the first beam (1) in its movements in relation to the second beam (2).

3. A crane according to claim 2, **characterized in that** the third hinge (13) comprises shaft pivot (24) that extends transversely to the piston rod (11a) and that, at locations actually separated from each other, is connected with the first beam (1) through a pair of second links (25), and **in that** the first link (23) is rotatably mounted in relation to an end of the shaft pivot (24).

## Patentansprüche

1. Kran, umfassend zwei Auslegerarme (1, 2), die zueinander drehbar sind, indem sie mit einander über ein Gelenk (8) verbunden sind, und umfassend einen oder mehrere Schläuche (14), die entlang der Auslegerarme (1, 2) und an der Außenseite und im Bereich des Gelenks (8) exponiert zwischen den Auslegerarmen verlaufen, und worin im Bereich des Gelenks (8) eine Führung (15) vorgesehen ist, die mit einem Querstück (16), das vom Gelenk beabstandet ist, versehen ist, wobei die Schläuche (14) an der Innenseite des Querstücks angeordnet sind, um durch das letztere nahe am Gelenk gehalten zu werden, **dadurch gekennzeichnet, dass** das Querstück (16) Teil eines Teils bildet, das im Querschnitt U-förmig ist und mit zwei Seitenstücken (17) versehen ist, die mit einem zum ersten Gelenk (8) parallelen zweiten Gelenk (18) verbunden sind, wobei die Schläuche (14) durch einen Raum zwischen dem Querstück (16) und dem zweiten Gelenk (18) geführt werden.

2. Kran nach Anspruch 1, **dadurch gekennzeichnet, dass** mindestens ein Seitenstück (17) mit einem ersten Ende eines Verbindungsglieds (23) starr verbunden ist, das gegenüberliegende Ende davon mit einem dritten Gelenk (13) verbunden ist, das so angeordnet ist, dass es einem freien Ende einer Kolbenstange (11a), die in einem Kolben-Zylinder-Mechanismus (10) enthalten ist, folgt, wobei es seine Aufgabe ist, einen der Auslegerarme (1, 2) relativ zum anderen zu drehen, wodurch das Verbindungsglied (23) **dadurch** sicherstellt, dass die Führung (15) dem ersten Auslegerarm (1) in seiner Bewegung relativ zum zweiten Auslegerarm (2) folgt.

3. Kran nach Anspruch 2, **dadurch gekennzeichnet, dass** das dritte Gelenk (13) einen Achszapfen (24) umfasst, der quer zur Kolbenstange (11a) verläuft, und der, an von einander getrennten Stellungen, mit dem ersten Auslegerarm (1) über ein Paar zweiter Gelenke (25) verbunden ist, und **dadurch**, dass das erste Gelenk (23) relativ zu einem Ende des Achszapfens (24) drehbar montiert ist.

## Revendications

1. Grue comprenant deux poutres (1, 2) mobiles de manière pivotante l'une par rapport à l'autre tout en étant connectées entre elles par l'intermédiaire d'une charnière (8) et comprenant un ou plusieurs flexibles (14) qui s'étendent le long des poutres (1, 2) et dans un état exposé de l'extérieur et au niveau de la charnière (8) entre les poutres et dans laquelle, au niveau de la charnière (8), se trouve un guidage (15) muni d'une pièce transversale (16) distante de la charnière, lesdits flexibles (14) étant disposés à l'intérieur de la pièce transversale afin d'être maintenus à proximité de la charnière par cette dernière, **caractérisée en ce que** la pièce transversale (16) fait partie d'un élément qui présente une section transversale en forme de U et qui est muni de deux pièces latérales (17) reliées à une seconde charnière (18) parallèle à la première charnière (8), lesdits flexibles (14) étant guidés à travers un espace entre la pièce transversale (16) et ladite seconde charnière (18).

2. Grue selon la revendication 1, **caractérisée en ce qu'**au moins une pièce latérale (17) est reliée de manière rigide à une première extrémité d'une articulation (23) dont l'extrémité opposée est reliée à une troisième charnière (13) conçue pour suivre une extrémité libre d'une tige de piston (11a) insérée dans un mécanisme à piston et cylindre (10) dont la tâche est de faire pivoter une des poutres (1, 2) par rapport à l'autre, ladite articulation (23) garantissant ainsi que le guidage (15) suit la première poutre (1) dans son mouvement par rapport à la seconde poutre (2).

3. Grue selon la revendication 2, **caractérisée en ce que** la troisième charnière (13) comprend un pivot d'arbre (24) qui s'étend transversalement par rapport à la tige de piston (11 a) et qui est relié, à des endroits différents, à la première poutre (1) par l'intermédiaire d'une paire de secondes articulations (25), et **en ce que** la première articulation (23) est montée de manière rotative par rapport à une extrémité du pivot d'arbre (24).
